(19) Europäisches Patentamt / European Patent Office / Office européen des brevets

(11) **EP 3 985 933 A1**

(12) **EUROPEAN PATENT APPLICATION**
published in accordance with Art. 153(4) EPC

(43) Date of publication:
**20.04.2022 Bulletin 2022/16**

(51) International Patent Classification (IPC):
**H04L 27/26** *(2006.01)*

(21) Application number: **19932678.6**

(52) Cooperative Patent Classification (CPC):
**H04L 27/26**

(22) Date of filing: **13.06.2019**

(86) International application number:
**PCT/JP2019/023581**

(87) International publication number:
**WO 2020/250398 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **HARADA Hiroki**
  **Tokyo 100-6150 (JP)**
• **NAGATA Satoshi**
  **Tokyo 100-6150 (JP)**
• **WANG Xin**
  **Beijing 100190 (CN)**
• **HOU Xiaolin**
  **Beijing 100190 (CN)**

(74) Representative: **Hoffmann Eitle**
**Patent- und Rechtsanwälte PartmbB**
**Arabellastraße 30**
**81925 München (DE)**

(54) **COMMUNICATION DEVICE**

(57) A communication equipment modulates a transmission bit sequence according to a modulation system. The communication equipment performs phase rotation on a modulated modulation signal. The communication equipment controls phase rotation by using a degree of second order or higher.

FIG. 3

EP 3 985 933 A1

**Description**

TECHNICAL FIELD

The present invention relates to a communication equipment that performs phase rotation on a modulation signal.

BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). In the 3GPP, specifications for 5th generation mobile communication system (5G, also called as New Radio (NR) or Next Generation (NG)) are also being considered.

In 5G NR (Release 15), millimeter frequency of maximum 52.6 GHz is supported, and in Release 16 and thereafter, the operation in a band beyond 52.6 GHz has been studied.

When the carrier frequency is very high, an increase in phase noise and propagation loss becomes a problem. It is also more sensitive to peak-to-average power ratio (PAPR) and power amplifier nonlinearity.

Therefore, in Release 15, a method of reducing PAPR by performing phase rotation (also called as constellation rotation (CR)) in an IQ (In-phase, Quadrature) plane on a modulation signal (modulation symbol) according to Binary Phase Shift Keying (BPSK), in a case of using Discrete Fourier Transform-Spread (DFT-S)-OFDM (Orthogonal Frequency Division Multiplexing) has been stipulated (refer to Non-Patent Document 1).

Specifically, after having modulated a subcarrier symbol according to BPSK, phase rotation of $\pi/2$ (90 degrees) ($\pi/2$-shift BPSK) is performed sequentially on the modulation signal. Accordingly, since a phrase of the modulation signal is distributed uniformly, and since it is possible to suppress a peak component after the inverse fast Fourier transform (IFFT), it is possible to reduce PAPR of a transmission signal effectively.

PRIOR ART DOCUMENT

NON-PATENT DOCUMENT

Non-Patent Document 1: 3GPP TS 38.211 V015.5.0, 3rd Generation Partnership Project; Technical Specification Group Radio Access Network; NR; Physical channels and modulation (Release 15), 3GPP, March 2019

SUMMARY OF THE INVENTION

However, an effect of reducing PAPR by $\pi/2$ fixed phase rotation as mentioned above is limited for a case of applying a multiple-value modulation system such as Quadrature Amplitude Modulation (QAM). Specifically, $\pi/2$ is not necessarily restricted to be the optimum angle of phase rotation, and the optimum angle differs according to the modulation system and system band width.

Furthermore, in a case of Cyclic Prefix (CP) OFDM which is a multi-carrier transmission system, the effect of reduction of PAPR due to phase rotation is more limited than that in DFT-S-OFDM.

Therefore, the present invention has been made in view of the above discussion, and one object of the present invention is to provide a communication equipment that is capable of reducing PAPR effectively by using phase rotation, regardless of the modulation system that is applied.

According to one aspect of the present invention a communication equipment (e.g., gNB 100) includes a modulation unit (modulation unit 110) that modulates a transmission bit sequence according to a modulation system; and a control unit (control unit 180) that controls a phase rotation with respect to a modulation signal modulated by the modulation unit. The control unit controls the phase rotation by using a degree of second order or higher.

BRIEF DESCRIPTION OF DRAWINGS

FIG. 1 is an overall schematic configuration diagram of a radio communication system 10.
FIG. 2 is a functional block diagram of a gNB 100, UE 200A, and a UE 200B.
FIG. 3 is an explanatory diagram of an operation of modulating a transmission bit sequence in a case of an uplink (UL) or a specific UE directed downlink (DL), and an operation of notifying information indicating a state of phase rotation on a modulation signal.

FIG. 4 is an explanatory diagram of an operation of modulating a transmission bit sequence in a case of a DL multi-user or a multi-channel, and an operation of notifying information indicating the state of phase rotation on a modulation signal.

FIG. 5A is a diagram showing an example of phase rotation based on a fixed angle.

FIG. 5B is a diagram showing an example of high-order phase rotation using a degree of second order.

FIG. 6 is a diagram showing an example of a table indicating combinations of an index, a phase rotation sequence (k), and a degree (o).

FIG. 7A is a diagram showing simulation result of Complementary Cumulative Distribution Function (CCDF) characteristics for each combination of a modulation system and phase rotation.

FIG. 7B is a diagram in which an upper left side shown in FIG. 7A is displayed upon enlarging partially (range from 7.5 dB to 8.5 dB).

FIG. 8 is a diagram showing a time-domain response (simulation result) for each type (degree) of phase rotation.

FIG. 9 is a diagram showing an example of a hardware configuration of the gNB 100, the UE 200A, and the UE 200B.

## MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

(1) Overall Schematic Configuration of Radio Communication System

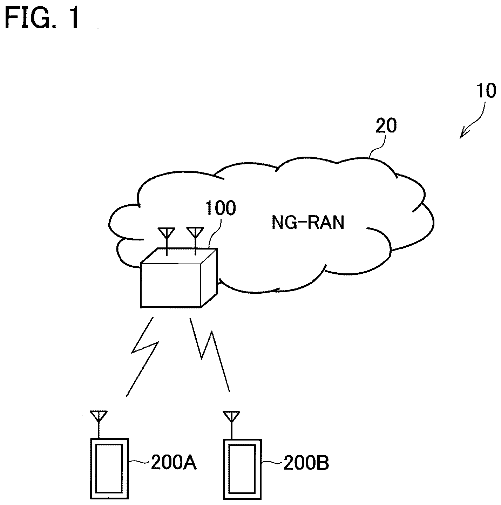

FIG. 1 is an overall schematic configuration diagram of a radio communication system 10 according to the present embodiment. The radio communication system 10 is a radio communication system according to 5G New Radio (NR). The radio communication system 10 includes Next Generation-Radio Access Network 20 (hereinafter, "NG-RAN 20") and a user terminal 200A and 200B (hereinafter, "UE 200A and UE 200B").

The NG-RAN 20 includes a radio base station 100 (hereinafter, "gNB 100"). A concrete configuration of the radio communication system 10, including the number of the gNBs and the UEs, is not limited to the example shown in FIG. 1. In the present embodiment, the gNB 100, the UE 200A and UE 200B constitute a communication equipment.

The NG-RAN 20 actually includes a plurality of NG-RAN Nodes, in particular, the gNBs (and ng-eNB). Also, the NG-RAN 20 is connected to a core network (5GC or NGC not shown) according to the 5G. The NG-RAN 20 and the 5GC may be simply expressed as "network".

The gNB 100 is a radio base station according to the 5G. The gNB 100 performs a radio communication with the UE 200A according to the 5G. The gNB 100 and UE 200A can handle, by controlling radio signals transmitted from a plurality of antenna elements, a massive MIMO that generate a more directional beam, a carrier aggregation (CA) that uses a bundle of multiple component carriers (CC), and a dual connectivity (DC) that performs communication between each of the UE and the two NG-RAN Node, and the like.

The radio communication system 10 corresponds to a plurality of frequency bands (FR). Concretely, the radio communication system 10 corresponds to FR1 and FR2. The frequency band of each FR is as below.

- FR1: 410 MHz to 7.125 GHz
- FR2: 24.25 GHz to 52.6 GHz

In FR1, 15 kHz, 30 kHz, or 60 kHz Sub-Carrier Spacing (SCS) is used, and a bandwidth (BW) of 5 MHz to 100 MHz is used. FR2 has a higher frequency than FR1. Moreover, FR2 uses SCS of 60 kHz or 120 kHz (240 kHz may be included), and uses a bandwidth (BW) of 50 MHz to 400 MHz.

Note that SCS may be interpreted as numerology. The numerology is defined in 3GPP TS38.300 and corresponds to one subcarrier spacing in the frequency domain.

Furthermore, the radio communication system 10 may deal with (support) a high-frequency band exceeding 52.6 GHz, in addition to FR 1 and FR 2.

Moreover, the radio communication system 10 may use Cyclic Prefix Orthogonal Frequency Division Multiplexing (CP-OFDM) as a multiplexing system (radio access system), similarly as LTE. CP-OFDM may be used in a downlink (DL) and an uplink (UL).

Alternatively, the radio communication system 10 may use Discrete Fourier Transform - Spread - OFDM (DFT-S-OFDM, DFT spread OFDM) as a multiplexing system. DFT-S-OFDM may be used as supplementary to CP-OFDM. Moreover, DFT-S-OFDM may be used only in the UL or may be used in both the DL and the UL.

In CP-OFDM, PAPR (Peak to Average Power Ratio) may become larger than ever before, and problems such as a degradation of efficiency of power amplification, and an increase in power consumption due to that, degeneracy of UL coverage, and an increase in a terminal cost may become remarkable, and DFT-S-OFDM, in light of such problems, is more advantageous than CP-OFDM.

In a case in which, a propagation loss of the gNB 100 and the UE 200A is small, alternatively, in a case in which the abovementioned problem does not become remarkable as when the transmission bandwidth is narrow, CP-OFDM may be used, and for cases other than this, DFT-S-OFDM may be used. Regarding as to, which of any of multiplexing systems (radio access systems) is to be used, may be determined by the network.

Furthermore, in the radio communication system 10, a modulation system in which, a so-called phase rotation (Phase Rotation) in which a phase in an IQ plane differs for each modulation symbol, similarly as π/2-shift BPSK introduced in Release 15 of NR, is introduced. As it has been well known, 'I' in the IQ plane stands for In-Phase (in-phase component, x-axis) and 'Q' stands for Quadrature (orthogonal component, y-axis), and signify an in-phase (phase 0 degree) component and an orthogonal (phase 90 degree) component with respect to a carrier wave which is a standard.

As a modulation system, it is possible to use Binary Phase Shift Keying (BPSK, binary), Quadrature Phase Shift Keying (QPSK, quaternary), and various Quadrature Amplitude Modulation (QAM) such as 16 QAM, 64 QAM, and 256 QAM. Note that, this modulation system may be called as a primary modulation system, and CP-OFDM and DFT-S-OFDM may be called as secondary modulation systems.

The phase rotation, due to a plurality of coordinates on the IQ plane, may be called as constellation rotation (Constellation Rotation CR), or, may be called as phase shift and the like. Moreover, the modulation symbol may be called as a subcarrier, a subcarrier symbol, or a modulation signal. Furthermore, the modulation symbol, the subcarrier, the subcarrier signal, and the modulation signal and the like may be read mutually.

In the present embodiment, the radio communication system 10 is capable of varying dynamically an amount of phase rotation on the modulation signal for each modulation signal (modulation symbol) using a degree of second order or higher, and not by an angle (π / 2, 90 degree) fixed such as π / 2-shift BPSK. Details of such phase rotation will be explained later.

(2) Functional Block Configuration of Communication equipment

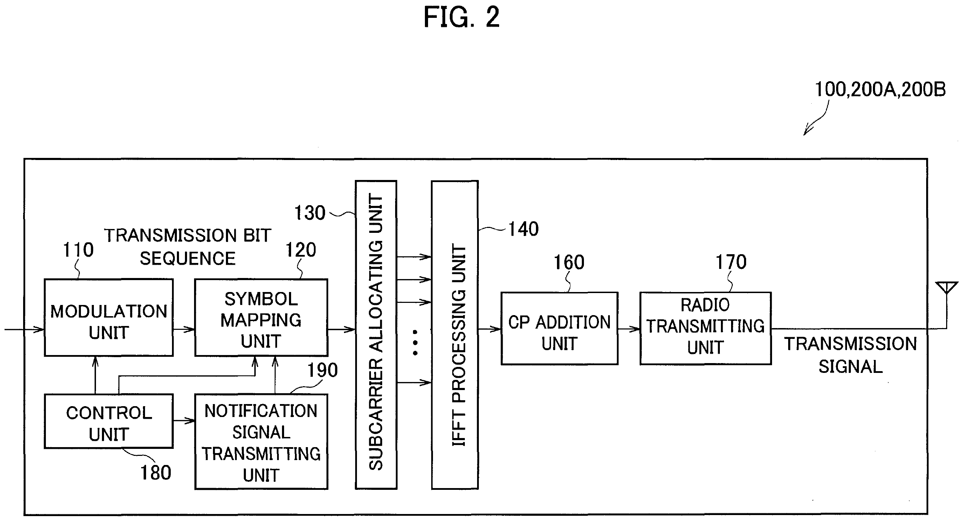

FIG. 2 is a functional block diagram of the gNB 100, the UE 200A and the UE 200B constituting a communication equipment. Specifically, FIG. 2 shows a functional block configuration on a transmission side of the communication equipment in a case of using CP-OFDM, and that on a reception side is omitted. It is to be noted that FIG. 2 shows only a functional block relevant to phase rotation on the abovementioned modulation signal. Moreover, the following explanation is made by citing an example of the gNB 100.

As shown in FIG. 2, the gNB 100 includes a modulation unit 110, a symbol mapping unit 120, a subcarrier allocating unit 130, an IFFT processing unit 140, a CP addition unit 160, a radio transmitting unit 170, a control unit 180, and a notification signal transmitting unit 190.

The modulation unit 110 modulates a transmission bit sequence on the basis of a modulation system. Specifically, the modulation unit 110 selects any modulation system (such as QPSK, 16QAM and the like) from a plurality of modulation systems that are stipulated.

In the communication equipment, the CP-OFDM is applied as mentioned above. Being digital communication, all information (voice, file and the like) is transmitted as an information bit sequence of 0 or 1. Data in a DL direction is transmitted via PDSCH (Physical Downlink Shared Channel), PDCCH (Physical Downlink Control Channel), or PBCH (Physical Broadcast Channel).

The symbol mapping unit 120 performs symbol mapping represented by vector on the basis of a modulation system selected by the modulation unit 110. A method of mapping depends on the modulation system such as QPSK, 16QAM and the like.

For example, if it is QPSK, information is transmitted by varying the phase of a subcarrier (radio waves) to four patterns . In this case, there are four types of symbols, and information of two bits is transmitted per symbol.

Moreover, if it is 16QAM, information is transmitted by varying a combination of amplitude and phase of subcarrier (radio waves) radio waves to 16 patterns. In this case, there are 16 types of symbols, and information of four bits is transmitted per symbol.

The carrier allocating unit 130 allocates a plurality of subcarriers of different carrier frequencies to a symbol (modulation symbol) output from the symbol mapping unit 120. The subcarriers are sine waves of different carrier frequencies, and phase and amplitude of each subcarrier is set according to the type of symbol that is transmitted.

The IFFT processing unit 140 performs inverse fast Fourier Transform (IFFT) on the plurality of symbols input simultaneously from the subcarrier allocating unit 130, and outputs a time signal sequence . The plurality of symbols input, are transmitted in parallel by separate subcarriers.

The CP addition unit 160 adds a cyclic prefix to an OFDM signal output from the IFFT processing unit 140.

As explained above, in the radio communication system 10, CP-OFDM is used. CP-OFDM is a type of an OFDM system that imparts a CP which is a guard time provided between the symbols for suppressing interference between the previous and the subsequent symbols caused due to multi-path. That is, CP may be called as a guard section or a guard interval.

The CP is inserted into a head portion of the OFDM symbol. Normally, the CP is a copy of a portion of a posterior half of the OFDM symbol. The OFDM symbol is a unit of data transmitted, and is constituted by a plurality of subcarriers.

Moreover, as explained above, in the present embodiment, although the CP-OFDM is used mainly, the DFT-S-OFDM is also used.

The radio transmitting unit 170 performs processing such as DAC (digital-analog conversion), transmission filtering, power amplification, and frequency up-conversion of an OFDM signal output from the CP addition unit 160. A transmission signal is transmitted toward the destination communication equipment as a radio signal via an antenna.

The control unit 180 controls each functional block constituting the gNB 100. Particularly, in the present embodiment, the control unit 180 performs phase rotation of a modulation signal modulated by the modulation unit 110.

The control unit 180 controls the modulation unit 110 and the symbol mapping unit 120, and controls an amount of phase rotation on the IQ plane of the symbol (modulation symbol) in accordance with the modulation system selected by the modulation unit 110.

Specifically, the control unit 180 control the phase rotation on the symbol by using a degree of second order or higher. More specifically, when the degree is let to be 'o' and an index of the modulation signal modulated sequentially is let to be 'n' , the control unit 180 controls the phase rotation on the basis of n°.

For instance, in a case in which the index n of the modulation signal (symbol) that is modulated sequentially is let to be 1, 2, 3 ... and the degree is let to be '2', the control unit 180 varies an amount of sequential phase rotation according to numerical values $1^2$ (=1), $2^2$ (=4), and $3^2$ (=9). An example of phase rotation having applied to a specific angle will be described further later.

Moreover, the control unit 180 is also capable of controlling by using a plurality of phase rotation patterns with different methods and amounts of phase rotation of the symbol. The plurality of phase rotation patterns may be generated by varying an angle which becomes a reference (may be called as a reference frequency parameter of the phase rotation), or, may be generated by varying the abovementioned degree. Alternatively, the plurality of phase rotation patterns may be generated by changing both of the degree and the angle that becomes a reference.

Moreover, the control unit 180 is capable of generating a plurality of signal waveforms (may be called as phase rotation sequence) by using the plurality of phase rotation patterns with different methods and amounts of phase rotation. The control unit 180 selects a signal waveform having a low peak to average power ratio from among the plurality of signal waveforms generated.

In this case, the control unit 180 may select a signal waveform having the lower PAPR, or may select any signal waveform having PAPR smaller than or equal to a threshold value.

The notification signal transmitting unit 190 transmits a notification signal to a destination communication equipment that becomes a counterpart of communication. Specifically, the notification signal transmitting unit 190 transmits information indicating a state of phase rotation to the destination communication equipment as a notification signal. In the present embodiment, the notification signal transmitting unit 190 constitutes a transmitting unit.

The notification signal transmitting unit 190 is capable of transmitting the notification signal by a plurality of transmission methods. Specifically, the notification signal transmitting unit 190 transmits information indicating phase rotation on a modulation signal to the destination communication equipment by using a cyclic prefix (CP).

More specifically, the notification signal transmitting unit 190 is capable of modulating information indicating the state of phase rotation, and multiplexing into CP in which some of the OFDM symbols are copied. Moreover, the notification signal transmitting unit 90 is capable of replacing a part of or the whole of CP by a prefix of Unique-Word (UW) that can identify the information indicating the state of the phase rotation.

In such manner, the information may be information indicating directly the signal waveform (phase rotation sequence) selected or information indicating an index associated with the information indicating the state of the phase rotation as it will be described later.

Furthermore, the notification signal transmitting unit 190 is capable of transmitting the information indicating the state of the phase rotation on a modulation signal to the destination communication equipment by using a shared channel with the destination communication equipment or a reference signal (RS). A specific method of transmitting the notification signal will be described further later.

(3) Operation of Communication Equipment

Next, an operation of the gNB 100, the UE 200A, and the UE 200B constituting the communication equipment will be explained below. Specifically, an operation of modulating a transmission bit sequence in a case of an uplink (UL) or a specific UE direction downlink (DL), and an operation of notifying the information indicating the state of phase rotation on a modulation signal will be described below.

(3.1) Modulation of Transmission Bit Sequence

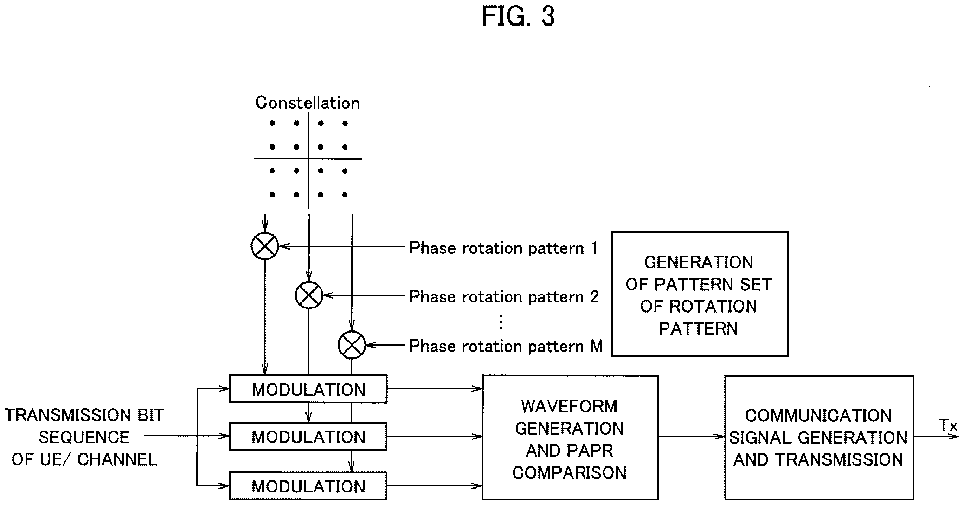

FIG. 3 is an explanatory diagram of the operation of modulating a transmission bit sequence in the case of the uplink (UL) or the specific UE directed downlink (DL), and the operation of notifying the information indicating the state of phase rotation on a modulation signal. The explanation will be made below by citing a DL transmission by the gNB 100 as an example.

As shown in FIG. 3, the transmission bit sequence of UE or a channel is modulated on the basis of a predetermined modulation system (BPSK, QPSK, 16QAM and the like).

The gNB 100 changes (varies) an amount of phase rotation of a modulation symbol by using a plurality of phase rotation patterns having different phase rotation (Phase rotation patterns 1, 2, ..., M) in the diagram).

The phase rotation (constellation rotation) of the modulation symbol is equivalent to a phase rotation in a frequency domain. A response of a time domain is significant for the reduction of PAPR.

In the present embodiment, a time-domain response of a plurality of signal waves (phase rotation sequence) generated by using the plurality of phase rotation patterns is analyzed, and PAPR is controlled. Moreover, in the present embodiment, as explained above, although the phase rotation on the symbol is controlled by using a degree of second order or higher (hereinafter, appropriately abbreviated as 'high-order phase rotation' or 'high-order phase shift'), constellation rotation in which a ZC (Zadoff-Chu) sequence is used may be applied.

As shown in FIG. 3, the gNB 100 is capable of generating a plurality of phase rotation patterns, and a set of the phase rotation patterns. As explained above, the plurality of phase rotation patterns may be generated by varying an angle which is a reference ($\pi$/2 and the like) or may be generated by varying the abovementioned degree. Furthermore, different modulation systems may be combined in the set of the phase rotation patterns.

Moreover, parameters included in the phase rotation pattern, such as the degree to be applied, may be notified appropriately from the network.

The gNB 100 by using such plurality of phase rotation patterns or the set of the phase rotation patterns, generates a plurality of signal waveforms (phase rotation sequence), and compares PAPR of the signal waveforms.

As explained above, the gNB 100, although is capable of selecting a signal waveform with the smallest PARP, may select any signal waveform for which the PAPR becomes smaller than or equal to a predetermined threshold value.

The gNB 100 generates the selected waveform, that is, a notification signal including information indicating the state of phase rotation, and transmits the notification signal generated to the destination communication equipment such as the UE 200A.

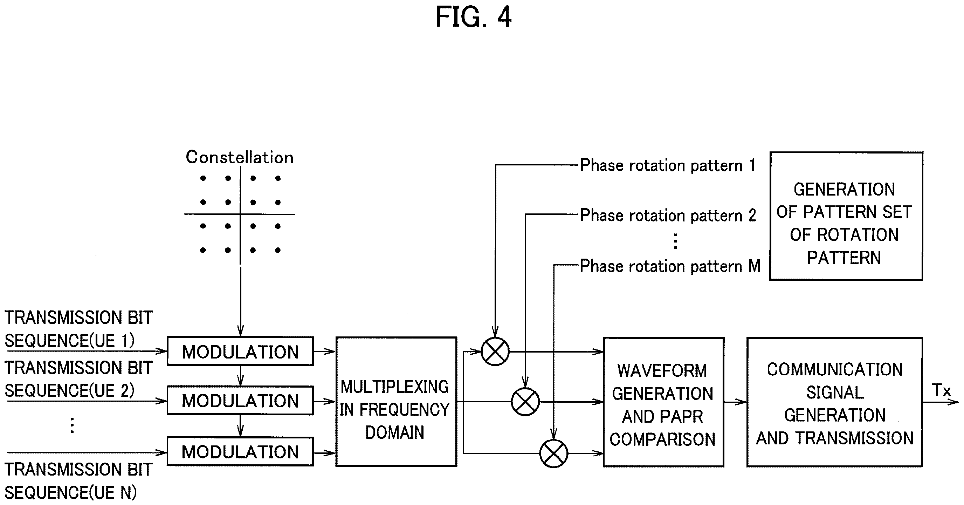

FIG. 4 is an explanatory diagram of an operation of modulating a transmission bit sequence in a case of a DL multi-user or a multi-channel, and an operation of notifying information indicating a state of phase rotation on a modulation signal. Mainly content differing from that in the case of the uplink (UL) or the specific UE directed downlink (DL) shown in FIG. 3 will be explained below.

As shown in FIG. 4, in the case of the DL multi-user or the multi-channel, after each of the plurality of UE directed (UE 1, 2, ..., N in the diagram) transmission bit sequences is modulated, the modulation signal is multiplexed in a frequency domain. Processing thereafter is similar as in FIG. 3.

(3.1.1) Phase Rotation Pattern

Next, details of the phase rotation pattern will be explained below. First, a phase rotation pattern in $\pi$/2-shift BPSK stipulated in Release 15 of 3GPP will be explained.

Specifically, in Release 15, the $\pi$/2-shift (may be simply referred to as $\pi$/2-BPSK) is used in combination with DFT-S-OFDM applied to the UL. In the $\pi$/2-shift, phase rotation (primary phase shift) of an angle ($\pi$/2, 90 degree) fixed on the basis of an FFT size is applied.

A rotation vector is represented as follows.

[Expression 1]

$$x_k(n) = \exp\left(j\frac{2\pi kn}{N_{fft}}\right)$$

Here, 'n' is a subcarrier index, 'k' is a reference frequency parameter, 'N$_{fft}$' is the FFT size. The angle of phase rotation is controlled by k / $N_{fft}$. Such phase rotation (primary phase shift) has almost no gain in CP-OFDM which is a multi-carrier transmission system.

Moreover, in a case of phase rotation based on the abovementioned ZC sequence, the rotation vector is represented as follows.

[Expression 2]

$$x_q(n) = \exp\left(j\frac{\pi q n(n+1)}{N_{ZC}}\right)$$

Here, 'n' is a subcarrier index, 'q' is a route of the ZC sequence, and '$NZ_c$' is a prime number which is a length of the ZC sequence. The ZC (Zadoff-Chu) sequence is a type of Constant Amplitude Zero Auto Correlation (CAZAC) sequence in which an amplitude is constant with respect to a time index, and which has a characteristic in which an auto-correlation function becomes a delta function. In a case of phase rotation based on the ZC sequence in such manner, as the length of a sequence has to be a prime number, it exerts a favorable performance, but lacks flexibility.

In the present embodiment, in light of such issues in the conventional phase rotation, the abovementioned high-order phase rotation (high-order phase shift) is used.

In the high-order phase rotation, phase rotation (phase shift) of second order or higher is performed based on the FFT size. In a case of high-order phase rotation, the rotation vector is represented as follows.

$$x_{k,o}(n) = \exp\left(j\frac{2\pi k n^o}{N_{fft}}\right)$$

Here, 'n' is a subcarrier index, 'k' is a reference frequency parameter of phase rotation, and '$N_{fft}$' is the FFT size. The angle of phase rotation is controlled by k / $N_{fft}$, and the degree of phase rotation is controlled by 'o'.

The high-order phase rotation enables to achieve a performance similar to the phase rotation based on the abovementioned ZC sequence, but there being not restriction in particular on the length of the sequence, the flexibility is high.

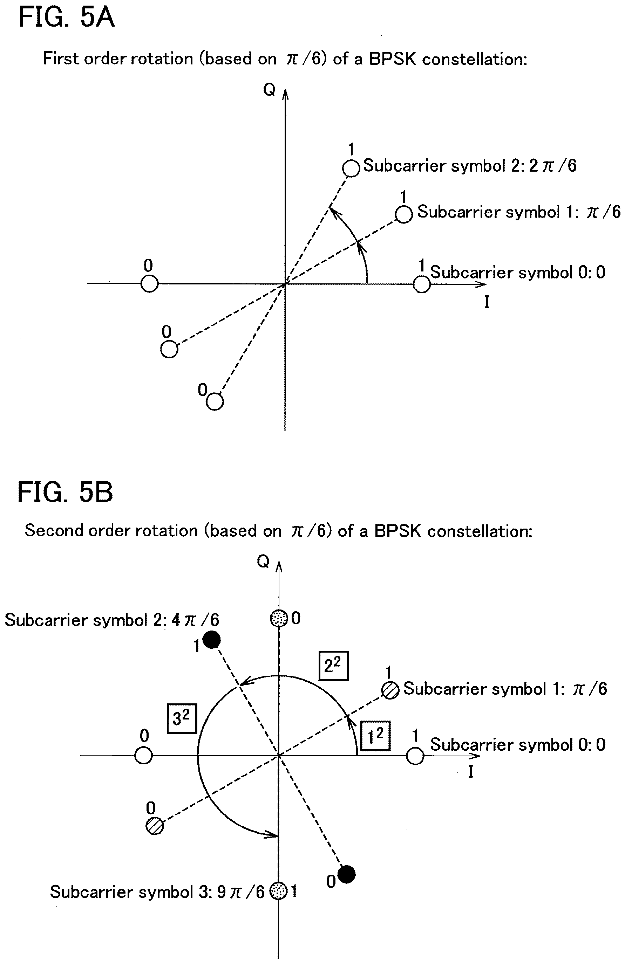

FIG. 5A and FIG. 5B show examples of phase rotation of a modulation signal. Specifically, FIG. 5A shows an example of phase rotation based on a fixed angle. Moreover, FIG. 5B shows an example of a high-order phase rotation (BPSK-based) using a degree of second order according to the present embodiment.

As shown in FIG. 5A, in a case of phase rotation (primary phase shift) based on a fixed angle similarly as the π/2-shift BPSK, for each subcarrier, a signal point position of a constellation bit map (circle mark in the diagram) on the IQ plane goes on shifting by a fixed angle. In FIG. 5A and FIG. 5B an example in which π/6 (30 degree) is a base is shown.

As shown in FIG. 5A, a subcarrier symbol 0 is positioned at 0 degree (and 180 degree, same applies hereafter), and subcarrier symbols 1, 2 are shifted to 30 degree (210 degree) and 60 degree (240 degree) respectively.

Whereas, as shown in FIG. 5B, in the case of high-order phase rotation using the degree of second order, for each subcarrier, the signal point position of the constellation bit map (circle mark in the diagram) on the IQ plane goes on shifting and an amount of phase rotation goes on increasing according to the degree.

Specifically, the subcarrier symbol 0 is positioned at 0 degree (and 180 degree) and the subcarrier symbol 1 is positioned at 30 degree (210 degree). This is similar as in FIG. 5A. And because n = 1, degree = 2, that is, $1^2$ = 1, π/6 (30 degree) .

Next, the subcarrier symbol 2 is positioned at 120 degree (300 degree). This is because, n = 2 and degree = 2, that is $2^2$ = 4, 4π/6 (120 degree).

Furthermore, the subcarrier symbol 3 is positioned at 270 degree (90 degree). This is because, n = 3 and degree = 2, that is, $3^2$ = 9, 9π/6 (270 degree).

Note that, in FIG. 5B, although the explanation was made by citing an example of binary BPSK for the sake of expediency of explanation, other modulation system such QPSK or QAM may be applied as a matter of course.

Furthermore, since the final PAPR maychange (vary) according to the combination of parameters 'k' and 'o'in the high-order phase rotation in which the degree of second order or higher is used, a waveform (that is, phase rotation pattern) having low PAPR is selected from among the waveforms generated by phase rotation on the basis of the FFT size by using combinations of the parameters 'k' and 'o'. Accordingly, it is possible to control the PAPR.

In the present embodiment, although for the sake of expediency of explanation, an example in which, degree = 2 was explained, the degree may be even higher. Furthermore, a plurality of phase rotation patterns in which, the degree applied differs, that is, different degrees are mixed, may be included in the abovementioned set of phase rotation patterns.

(3.1.2) Generation of Plurality of Phase Rotation Patterns

Next, a method of generating a phase rotation pattern (and a set of phase rotation patterns) will be explained below. In the present embodiment, for performing an appropriate high-order phase rotation, a plurality of phase rotation patterns is generated.

As explained above, the phase rotation is performed on the basis of the plurality of phase rotation patterns generated, and a signal waveform based on a phase rotation pattern for which the PAPR is the smallest is selected. The phase rotation pattern selected is notified by a notification signal (descried later) to a destination communication equipment such as the UE 200A.

Note that, in the case of the ZC sequence, as shown below, for achieving the optimum phase rotation pattern that enables the minimization of the PAPR, it is necessary to retrieve route q.

[Expression 4]

$$x_q(n) = \exp\left(j\frac{\pi q n(n+1)}{N_{ZC}}\right), q = 1, \dots, N_{ZC} - 1$$

Whereas, in the case of high-order phase rotation, it is necessary to retrieve the reference frequency parameter (k) and the degree (o), and to find the optimum phase rotation pattern that enables to minimize the PAPR.

[Expression 5]

$$x_{k,o}(n) = \exp\left(j\frac{2\pi k n^o}{N_{fft}}\right), k = 0, \dots, N_{fft} - 1, o = 0, 1, 2 \dots$$

Here, in a case of the high-order phase rotation and ZC sequence, taking into consideration the complexity of calculation and an overhead reduction of signaling, the number of candidates for the phase rotation patterns may be reduced.

For example, regarding the route q for the ZC sequence, q number of candidates may be selected for each uniform interval from 1 to $N_{zc}$ - 1. Alternatively, in the case of high-order phase rotation, the degree (o) may be let to be fixed, and the candidate value of k (reference frequency parameter) may be selected for each uniform interval.

Furthermore, in a case in which, the FFT size ($N_{fft}$) is 256-point for example, the number of phase rotation patterns may be reduced to an interval smaller than 256-point (may be reduced to number corresponding to the number set according to 8-point or 16-point).

That is, from k = 0, ..., $N_{fft}$-1, the candidate value may be selected at a uniform interval.

Moreover, in a case in which, a plurality of phase rotation patterns in which different degrees are mixed (mixed degree phase shift) is included, a candidate value of k and a candidate value of o may be selected uniformly from k = 0, ..., $N_{fft}$ - 1, and o = 2, ..., 8 respectively.

(3.2) Notification of Information Indicating State of Phase Rotation

Next, a design of a notification signal notifying information indicating the state of phase rotation to the destination communication equipment will be explained below.

In the following design example, it is assumed that one value from the candidate values for the reference frequency parameter 'k' and the degree 'o' (refer to the following numerical expression) selected for the control of PAPR has been selected.

[Expression 6]

$$x_{k,o}(n) = \exp\left( j\frac{2\pi k n^o}{N_{fft}} \right)$$

(3.2.2) Design Example 1

In the present design example, in order that the destination communication equipment, that is, the receiving side, is capable of detecting the phase rotation patent selected by the OFDM symbol, information indicating the state of phase rotation, specifically, information of the phase rotation pattern, that is, information of k and o, is multiplexed in a CP portion of the CP-OFDM symbol and transmitted.

The following numerical expression represents the CP in which the information indicating the information of the state of phase rotation has been multiplexed in such manner.

[Expression 7]

$$S'_{cp}(t) = S_{cp}(t) \exp\left( j\frac{2\pi k \alpha (mt)^o}{N_{fft}} \right), t = 0, \dots, N_{cp} - 1.$$

$S_{cp}(t)$ is a time-domain signal of the original CP in the CP-OFDM symbol. $S'_{cp}(t)$ is a time-domain of the CP after the phase rotation pattern information was multiplexed. '$\alpha$' is a scaling parameter. 'm' is a non-negative integer that can be specified and used for optimizing a detection performance.

(3.2.2) Design Example 2

In the present design example, instead of the pattern of multiplexing in the CP of the design example 1, a prefix of Unique-Word (UW) that enables specifying the information indicating the state of phase rotation is used. The UW is to be a data arrangement that does not appear as a CP-OFDM symbol.

When compared with the design example 1, in the present design example, a part of or the whole of CP is replaced by the prefix of UW.

The following numerical expression represents a time-domain signal ($S_{UW}(t)$) of CP replaced by the prefix of UW in such manner.

[Expression 8]

$$S_{uw}(t) = \exp\left(j\frac{2\pi k\alpha(mt)^o}{N_{fft}}\right), t = 0, \ldots, N_{cp} - 1.$$

(3.2.3) Design Example 3

In the present design example, a notification signal notifying the information indicating the state of phase rotation is transmitted by using a common channel with a destination equipment such as the UE 200A, or the reference signal (RS).

Specifically, the information indicating the state of phase rotation is transmitted by using a common channel of slots constituting a radio frame, or a common RS.

The following numerical expression represents an example of a notification signal (S(t)) that includes the information indicating the state of phase rotation in such manner.

[Expression 9]

$$S(t) = \exp\left(j\frac{2\pi k\alpha(mt)^o}{N_{fft}}\right), t = 0, \ldots, N - 1$$

Here, 'N' is determined by a time length in the common channel or the common RS that is used. Note that, the common channel, for instance, may be a channel of a physical layer or may be a channel of a layer upper than the physical layer. Moreover, the common RS may be a Demodulation reference signal (DMRS) of the common channel or may be a Channel State Information Reference Signal (CSI-RS).

Moreover, in a case of using the common channel in particular, the phase rotation pattern that has been selected may be specified on the basis of the index indicating the phase rotation pattern generated.

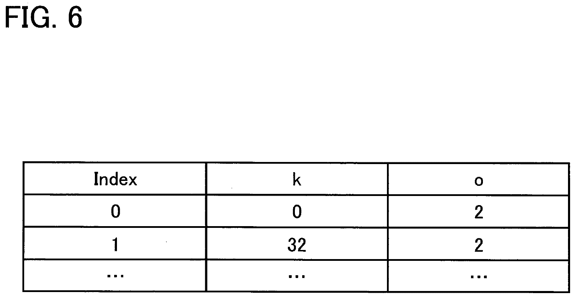

FIG. 6 shows an example of a table indicating combinations of the index, the reference frequency parameter (k) of the phase rotation, and the degree (o).

'Index' corresponds to the combination of the reference frequency parameter (k) of phase rotation and the degree (o). The content of the table shown in FIG. 6 and the phase rotation pattern used are known to, that is, shared by, the transmitting side and the receiving side, and in a case in which index '1' is notified, the receiving side is capable of acknowledging that k = 32, and the degree used is '2'. Accordingly, the receiving side is capable of determining as to how the phase rotation on the modulation signal is performed.

Moreover, the transmitting side may notify values of k and o instead of the index, or one of the two may be shared by the transmitting side and the receiving side, and may notify only one.

(3.2.4) Design example 4

In the present design example, the index explained in the design example 3 is notified by using downlink control information (DCI). That is, in the present design example, a table similar to the table shown in FIG. 6 is used.

A DCI format to be applied is not restricted in particular, and it may be any DCI format provided that it enables notification of the index.

(3.2.5) Design Example 5

In the present design example, the phase rotation pattern is notified by information of the phase rotation pattern selected, by multiplexed in an RS such as DMRS.

The following numerical expression represents the RS in which the phase rotation pattern is multiplexed in

such manner.

[Expression 10]

$$S'_{RS}(n) = S_{RS}(n) \exp\left(j\frac{2\pi k\alpha(mn)^o}{N_{fft}}\right), n = 0, \ldots, N_{RS} - 1.$$

$S_{RS}(n)$ is an original RS sequence. $N_{RS}$ is a length of the RS sequence. Note that, if the phase rotation pattern is notifiable, an RS (such as CSI-RS and the like) other than DMRS may be used.

(3.2.6) Others (Miscellaneous)

As the abovementioned design examples 1 to 5, in the present embodiment, it is possible to notify information indicating the state of phase rotation by using an OFDM symbol or slot.

As the design example 1, the receiving side, for detecting the phase rotation pattern that is selected, is capable of using a portion (segment) corresponding to the CP and OFDM symbols.

Moreover, in a case of using UW as in the design example 2, the UW transmitted by the CP portion is capable of functioning as a reference signal for notifying the phase rotation.

In the case of the design example 1 and the design example 2, the CP portion of the OFDM signal being used, there is no increase in load of overhead and the like.

Moreover, in the case of the design example 3, the shared channel or the RS being used, broadcast notification to a plurality of destination communication equipment becomes possible. Furthermore, in a case of using the DCI as in the design example 4 and in a case of using the DMRS as in the design example 5, notification to each destination communication equipment becomes possible.

Moreover, the abovementioned design example of notification signal may be used combinedly. For example, some information may be notified by using the DCI (design example 4), and the remaining information may be notified by using the DMRS (design example 5), or may be notified according to any of the design examples 1 to 3.

Moreover, a notification in which, the shared channel is used and a notification for each destination communication equipment may be combined. In this case, in the shared channel, a reference phase rotation pattern common to the plurality of destination communication equipment may be notified, and furthermore, as a phase rotation pattern for each destination communication equipment, a bias value corresponding to a common phase rotation patterns that becomes a reference may be notified.

Moreover, transmission of the abovementioned notification signal, without being restricted to a case of using the high-order phase rotation necessarily, and even in a case of performing the phase rotation using the ZC sequence as explained above, may be applied to notifying to the destination communication equipment, as to what type of phase rotation was performed.

Furthermore, as explained above, in the present embodiment, since it is possible to reduce the number of phase rotation patterns, the receiving side, without receiving such notification signal, may determine upon calculating blindly the phase rotation pattern for which the PAPR becomes the smallest, from among the plurality of phase rotation patterns selected in advance.

(4) Advantageous Effects

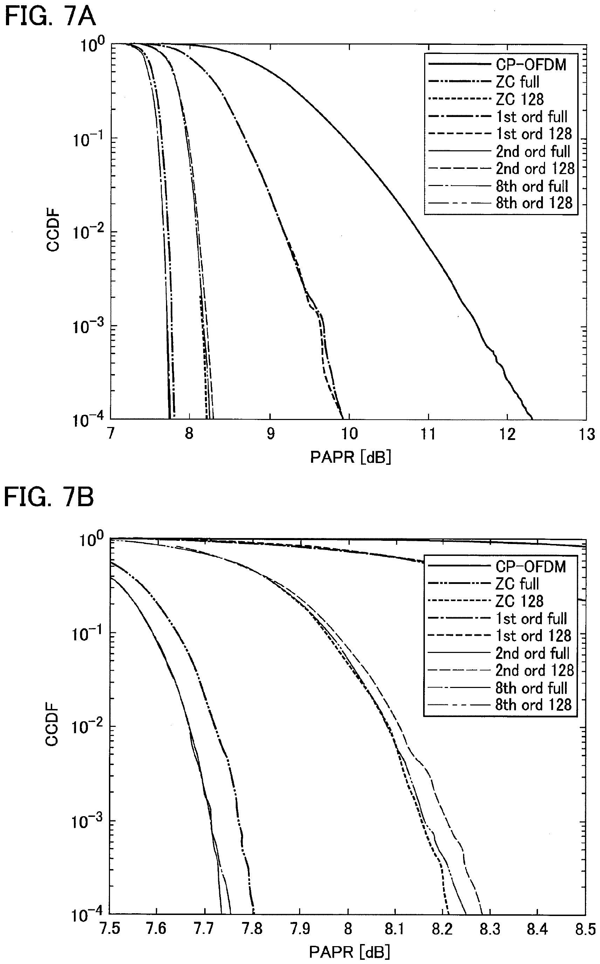

Next, advantageous effects of the high-order phase rotation according to the abovementioned communication equipment will be explained below. FIG. 7A and FIG. 7B show performance evaluation result for each combination of the modulation system and phase rotation.

Specifically, FIG. 7A shows a simulation result of Complementary Cumulative Distribution Function (CCDF) characteristics for each combination of the modulation system and the phase rotation. Moreover, FIG. 7B is a diagram in which an upper left side shown in FIG. 7A is displayed upon enlarging partially (range from 7.5 dB to 8.5 dB).

CCDF is a probability of generation of a signal having the PAPR exceeding a value on a horizontal axis, in the OFDM symbol generated.

As shown in FIG. 7A and FIG. 7B, referring to a PAPR level (dB) at which the CCDF is $10^{-4}$, the PAPR could be reduced effectively in the high-order phase rotation using the degree of second order or higher (2nd ord, 8th ord in

the diagram) .

Note that, in the simulation result, in a case in which all the reference frequency parameters based on the FFT size ($N_{fft}$) are generated (Full sequence indicated as full in the diagram), a case in which the reference frequency parameters of some of the phase rotations (candidate value restricted to 128)of the FFT size is indicated.

Even in a case in which the reference frequency parameters of some of the phase rotations of the FFT size are generated, and from among the reference frequency parameters generated, a reference frequency parameter of a phase rotation for which the PAPR is the lowest is selected, the PAPR in the same CCDF is reduced more than in phase rotation in which the degree of first order was used.

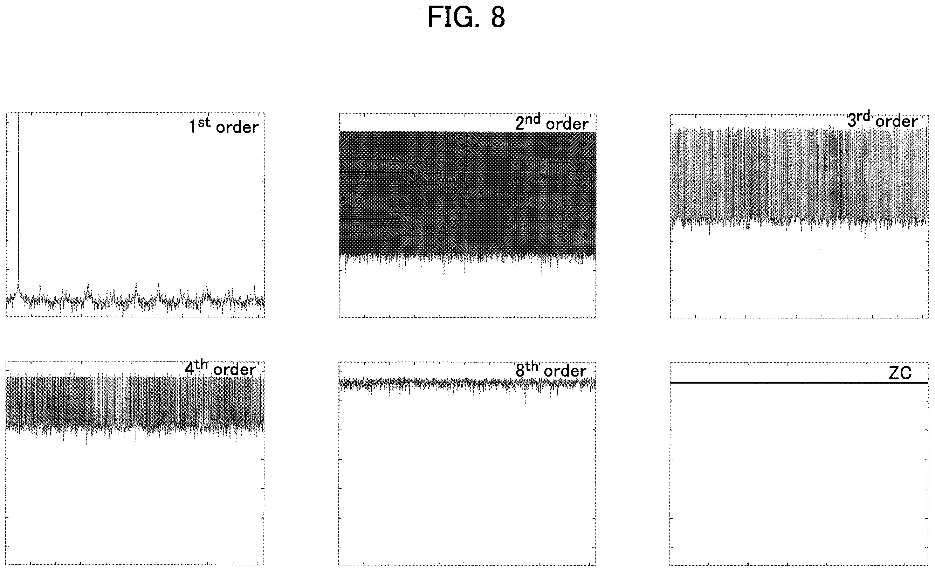

FIG. 8 shows the time-domain response (simulation result) for each type (degree) of phase rotation. A horizontal axis of each graph in FIG. 8 corresponds to a time domain and a vertical axis of each graph in FIG. 8 corresponds to a peak component of a signal.

As shown in FIG. 8, phase rotation in which the degree of first order was used, the peak component of the signal protrudes in a specific time domain, and in the high-order phase rotation of second order or higher, a variation in the peak component of the signal becomes smaller as the degree becomes higher. Note that, as shown in FIG. 8, the phase rotation in which, the ZC sequence was used, has the highest capability to suppress the peak component.

In such manner, the high-order phase rotation of second order or higher or the phase rotation in which the ZC sequence is used can be deemed as a sliding window operation of time domain on a signal. Accordingly, a peak of the signal becomes smooth, and the PAPR is reduced.

Phase rotation in which the ZC sequence is used has the smoothest time-domain response, but has some drawbacks as mentioned above. That is, the length of the ZC sequence has to be a prime number, and lacks flexibility. In practical application, when a truncation or padding operation occurs, the superior capability of the ZC sequence to suppress the peak component as explained above is disrupted.

Moreover, in the case of the ZC sequence, the sequence and the route (q) depend on a length of a data length (transmission bit sequence) of a modulation target. This leads to a lack of flexibility and a complexity of mounting, and adaption to various data lengths is also restricted.

The high-order phase rotation of the second order or higher can eliminate such drawbacks of the ZC sequence. Moreover, it is possible to perform phase rotation that is capable of reducing effectively the PAPR not only for the DFT-S-OFDM in which the π/2-shift BPSK is used but also for the CP-OFDM and all the multiplexing systems (secondary modulation systems).

Furthermore, since it is possible to notify the information indicating the state of the phase rotation selected, to the receiving side by the notification signal, the receiving side (destination communication equipment) is capable of determining the amount of phase rotation easily, and to perform demodulation and the like.

That is, according to the communication equipment gNB 100 and the UE 200A and the like, is it possible to reduce the PAPR effectively by using phase rotation, regardless of the modulation system used.

(5) Other Embodiments

Although the contents of the present invention have been described by way of the embodiments, it is obvious to those skilled in the art that the present invention is not limited to what is written here and that various modifications and improvements thereof are possible.

For example, the phase rotation pattern based on the high-order phase rotation may be specified as a part of the modulation system or as a data scrambling system.

Moreover, the high-order phase rotation may be put ON or OFF by signaling. Furthermore, a group of phase rotation patterns may be stipulated by specifications. Such group is a set of candidate patterns for the PAPR reduction. Furthermore, a dynamic notification or slot of the phase rotation pattern used for transmission of the transmission bit sequence, alternatively, a periodic notification of a frame base may be taken into consideration.

In the abovementioned embodiment, although the explanation was made by citing an example of the NR (5G) of 3GPP, the abovementioned high-order phase rotation may be applied to a wireless or wired communication system in which a similar modulation system is used.

Moreover, the block diagram used for explaining the embodiments (FIG. 2) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

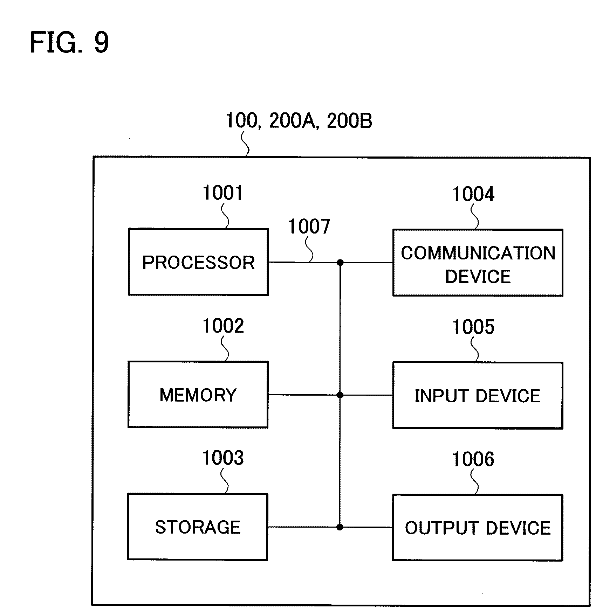

Furthermore, the gNB1 100, UE 200A, and UE 200B (reference device) explained above can function as a computer that performs the processing of the radio communication method of the present disclosure. FIG. 9 is a diagram showing an example of a hardware configuration of the reference device. As shown in FIG. 9, the reference device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the reference device (see FIG. 2) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission/reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware . For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, a common RB may be specified by RB index based on the common reference point of the carrier. PRB may be defined in BWP and numbered within that BWP.

BWP may include UL BWP (UL BWP) and DL BWP (DL BWP) . One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP" .

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

EXPLANATION OF REFERENCE NUMERALS

| | |
|---|---|
| 10 | Radio communication system |
| 20 | NG-RAN |
| 100 | gNB |
| 110 | Modulation unit |
| 120 | Symbol mapping unit |
| 130 | Subcarrier allocating unit |
| 140 | IFFT processing unit |
| 160 | CP addition unit |
| 170 | Radio transmitting unit |
| 180 | Control unit |
| 190 | Notification signal transmitting unit |
| 200A, 200B | UE |
| 1001 | Processor |
| 1002 | Memory |
| 1003 | Storage |
| 1004 | Communication device |
| 1005 | Input device |
| 1006 | Output device |
| 1007 | Bus |

**Claims**

1. A communication equipment comprising:

   a modulation unit that modulates a transmission bit sequence according to a modulation system; and
   a control unit that controls a phase rotation with respect to a modulation signal modulated by the modulation unit, wherein
   the control unit controls the phase rotation by using a degree of second order or higher.

2. The communication equipment as claimed in claim 1, wherein when the degree is let to be 'o'and an index of the modulation signal that is subjected to sequential modulation is let to be 'n', the control unit controls the phase rotation on the basis of n°.

3. The communication equipment as claimed in claim 1 or 2, wherein the control unit selects, from among a plurality of signal waveforms generated by using a plurality of phase rotation patterns, a signal waveform for which a peak to average power ratio is low.

4. A communication equipment comprising:

   a control unit that performs a phase rotation on a modulation signal; and
   a transmitting unit that transmits information indicating a state of the phase rotation to a destination communication equipment by using a cyclic prefix.

5. A communication equipment comprising:

a control unit that performs a phase rotation on a modulation signal; and
a transmitting unit that transmits information indicating a state of the phase rotation to a destination communication equipment by using a shared channel or a reference signal.

FIG. 1

# FIG. 2

100,200A,200B

EP 3 985 933 A1

# FIG. 3

Constellation

Phase rotation pattern 1

Phase rotation pattern 2

⋮

Phase rotation pattern M

GENERATION
OF PATTERN SET
OF ROTATION
PATTERN

MODULATION

TRANSMISSION BIT
SEQUENCE
OF UE/ CHANNEL

MODULATION

MODULATION

WAVEFORM
GENERATION
AND PAPR
COMPARISON

COMMUNICATION
SIGNAL GENERATION
AND TRANSMISSION

Tx

EP 3 985 933 A1

## FIG. 4

# FIG. 5A

First order rotation (based on $\pi/6$) of a BPSK constellation:

# FIG. 5B

Second order rotation (based on $\pi/6$) of a BPSK constellation:

# FIG. 6

| Index | k | o |
|-------|-----|-----|
| 0 | 0 | 2 |
| 1 | 32 | 2 |
| ... | ... | ... |

## FIG. 7A

## FIG. 7B

FIG. 8

FIG. 9

100, 200A, 200B

```
        1001            1007           1004
┌──────────────┐              ┌──────────────────┐
│              │              │  COMMUNICATION   │
│  PROCESSOR   │──────●──────│     DEVICE        │
│              │      │       │                  │
└──────────────┘      │       └──────────────────┘

        1002          │             1005
┌──────────────┐      │       ┌──────────────────┐
│              │      │       │                  │
│   MEMORY     │──────●──────│   INPUT DEVICE    │
│              │      │       │                  │
└──────────────┘      │       └──────────────────┘

        1003          │             1006
┌──────────────┐      │       ┌──────────────────┐
│              │      │       │                  │
│   STORAGE    │──────●──────│  OUTPUT DEVICE    │
│              │              │                  │
└──────────────┘              └──────────────────┘
```

## INTERNATIONAL SEARCH REPORT

| | International application No. |
|---|---|
| | PCT/JP2019/023581 |

| A. CLASSIFICATION OF SUBJECT MATTER |
|---|
| Int. Cl. H04L27/26(2006.01)i |
| According to International Patent Classification (IPC) or to both national classification and IPC |

| B. FIELDS SEARCHED |
|---|
| Minimum documentation searched (classification system followed by classification symbols) |
| Int. Cl. H04L27/26 |

Documentation searched other than minimum documentation to the extent that such documents are included in the fields searched

```
Published examined utility model applications of Japan      1922-1996
Published unexamined utility model applications of Japan    1971-2019
Registered utility model specifications of Japan            1996-2019
Published registered utility model applications of Japan    1994-2019
```

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
|---|---|---|
| X | WO 2007/020943 A1 (PANASONIC CORP.) 22 February | 5 |
| Y | 2007, paragraphs [0008]-[0011] & CN 1917490 A | 4 |
| A | | 1-3 |
| Y | JP 2004-153676 A (MITSUBISHI ELECTRIC CORP.) 27 | 4 |
| A | May 2004, paragraphs [0007]-[0009] (Family: none) | 1-3, 5 |
| A | JP 2016-219976 A (NIPPON TELEGRAPH AND TELEPHONE CORP.) 22 December 2016, paragraphs [0082]-[0091], fig. 3 (Family: none) | 1-5 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03.12.2019 | 17.12.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; NR; Physical channels and modulation (Release 15). *3GPP TS 38.211 V015.5.0,* March 2019